**Europäisches Patentamt**

**European Patent Office**

**Office européen des brevets**

(19)

(11) Veröffentlichungsnummer: **0 037 923**
**B2**

(12) **NEUE EUROPÄISCHE PATENTSCHRIFT**

(45) Veröffentlichungstag der neuen Patentschrift:
04.02.87

(21) Anmeldenummer: 81102138.5

(22) Anmeldetag: 21.03.81

(51) Int. Cl.⁴: **C 08 F 2/24, C 08 F 2/40,**
**C 08 F 2/00, C 08 F 220/12**

(54) Verfahren zur Herstellung von wässrigen Polymer-Dispersionen mit einem Polymerisatgehalt bis 75 Gew.%.

(30) Priorität: 10.04.80 DE 3013812

(43) Veröffentlichungstag der Anmeldung:
21.10.81 Patentblatt 81/42

(45) Bekanntmachung des Hinweises auf die Patenterteilung:
05.10.83 Patentblatt 83/40

(45) Bekanntmachung des Hinweises auf die Entscheidung
über den Einspruch:
04.02.87 Patentblatt 87/6

(84) Benannte Vertragsstaaten:
BE CH DE FR GB IT LI SE

(56) Entgegenhaltungen:
DE-A-2 145 495
US-A-3 248 356

J.Brandrup et al. Polymer Handbook, 2. Aufl. (1975),
II-116, Abs. "Acrylic Acid"
J.Brandrup et al., Polymer Handbook (1966), II-258,
Abs. "Vinyl chloride"
Technisches Merkblatt der Fa. NORSOLOR, Paris
(1978), Acrylsäure;

(73) Patentinhaber: BASF Aktiengesellschaft, Carl-
Bosch- Strasse 38, D-6700 Ludwigshafen (DE)

(72) Erfinder: Druschke, Wolfgang, Dr., Berliner
Strasse 28, D-6711 Dirmstein (DE)
Erfinder: Kerckow, Albrecht, Dr., In den
Weingaerten 3, D-6706 Wachenheim (DE)
Erfinder: Stanger, Bernd, Dr., Habichtstrasse 18,
D-6724 Dudenhofen (DE)

EP 0 037 923 B2

**Beschreibung**

Bei den bekannten Monomerenemulsions-Zulaufverfahren wird in eine wäßrige Vorlage, die Polymerisationsinitiator, Emulgatoren -- meist anionische und ggf. zusätzlich nichtionische Emulgatoren - sowie auch geringe Mengen Puffersalze enthält, eine wäßrige Emulsion der Monomeren sowie getrennt davon gleichzeitig eine wäßrige Lösung von weiterem Polymerisationsinitiator bei Polymerisationstemperatur nach Maßgabe der Polymerisation der Monomeren zugefahren. Das Verfahren wird im großen Umfang zur Herstellung von Polyacrylat-Dispersionen, Polymethacrylat-Dispersionen, Vinylchlorid-Copolymerisat-Dispersionen, Butadien-Styrol-Copolymerisat-Dispersionen, Vinylidenc hlorid-Copolymerisat-Dispersionen und Polyvinylester-Dispersionen angewandt. Als Polymerisationsinitiatoren dienen dabei im allgemeinen wasserlösliche Peroxide, wie vor allem Ammoniumpersulfat, Natriumpersulfat und Kaliumpersulfat, sowie ferner Redoxinitiatoren. Die Monomeren können dabei noch geringe Mengen der bei ihrer Lagerung zugesetzten Polymerisationsinhibitoren enthalten. Diese Mengen liegen in der Praxis im allgemeinen zwischen 10 und 50 ppm, bezogen auf die gesamten Monomeren. Bei dem Verfahren erhält man im allgemeinen wäßrige Polymer-Dispersionen eines Polymerisatgehalts von 40 bis 60 Gew.%.

Es wurde nun gefunden, daß man wäßrige Polymer-Dispersionen mit einem Polymerisatgehalt bis 75 Gew.% durch Emulsionscopolymerisation in Gegenwart üblicher anionischer Emulgatoren, Polymerisationsinitiatoren und geringer Mengen Polymerisationsinhibitoren bei üblichen Polymerisationstemperaturen herstellen kann, indem man mindestens zwei allein mit sich nicht copolymerisierbare Monomere A, im Gemisch mit 60 bis 95 Gew.%, bezogen auf die gesamten Monomeren, mindestens eines Monomeren B, das mit beiden Monomeren A copolymerisierbar ist, unter Zusatz eines Polymerisationsinhibitors nach dem Emulsionsverfahren derart copolymerisiert, daß (a) die vorgelegte wäßrige Phase bei Beginn des Monomerenemulsionszulaufs 0,01 bis 0,5 Gew.%, bezogen auf die Vorlage, anionischen Emulgator und 1 bis 7 Gew.%, bezogen auf die Vorlage, wasserlösliche Salze und (b) die Monomerenemulsion 50 bis 500 ppm, bezogen auf die gesamten Monomeren, Polymerisationsinhibitoren enthält und (c) 1 bis 10 Gew.% der Monomeronemulsion innerhalb 1/2 Stunde ab Zulaufbeginn in pro Zeiteinheit zunehmender Menge zu der Vorlage zugegeben und dann anschließend (d) die restliche Monomerenemulsion in an sich üblicher Weise nach Maßgabe der Polymerisation der Monomeren zugefahren wird.

> Es ist überraschend, daß man besonders hochkonzentrierte Polymer-Dispersionen von z. B. 70 bis 75 Gew.% Polymerisat, bezogen auf die Dispersion unter Verwendung von zwei Monomeren A erhalten kann, die mit sich selbst nicht copolymerisieren, wenn man "als Schleppmittel" Monomere B mitverwendet und unter Bedingungen polymerisiert, die zu einer starken Verzögerung der Polymerisationsgeschwindigkeit in der Anfangsphase führen. Solche Bedingungen sind geringe Emulgatormengen, am Anfang hoher Salzgehalt der wäßrigen Phase und Mitverwendung von Polymerisationsinhibitoren in verhältnismäßig großer Menge, wie sie üblicherweise nicht zur Stabilisierung der Monomeren für die Lagerung angewandt wird. Überraschend ist auch, daß bei dem neuen Verfahren nur dann hochkonzentrierte Dispersionen erhalten werden können, wenn man gemäß der Maßnahme (c) zunächst einen geringen Anteil der Monomerenemulsion der Vorlage besonders langsam und in zunehmenden Mengen zuführt.

Bei dem neuen Verfahren können die üblichen radikalbildenden organischen oder anorganischen Polymerisationsinitiatoren eingesetzt. Von besonderem Interesse sind wasserlösliche Persulfate, wie Ammoniumpersulfat, Natriumpersulfat und Kaliumpersulfat sowie Redoxinitiatoren z. B. Gemische aus derartigen Persulfaten oder Wasserstoffperoxid mit Reduktionsmitteln, wie Natriumhydrogensulfit, Ascorbinsäure oder dem Natriumsalz der Hydroxymethansulfinsäure.

Als anionische Emulgatoren, die in der Vorlage vorzugsweise in Anteilen von 0,1 bis 0,4 Gew.% bezogen auf die Vorlage und in dem Monomerenzulauf in Anteilen von im allgemeinen 0,5 bis 3, vorzugsweise von 0,5 bis 1,2 Gew.% bezogen auf die Gesamtmonomeren enthalten sind, kommen vor allem Natrium-Laurylsulfat, Natrium-Alkylsulfonat (Alkyl $= C_{11} - C_{17}$), Natrium-Alkylarylsulfonat (Alkyl $= C_8 - C_{12}$), und die Natriumsalze von oxäthylierten Sulfaten von 8 bis 18 C-Atomen enthaltenden Alkanolen in Frage.

Zusätzlich können noch, in Anteilen von 0 bis 2 Gew.%, bezogen auf die Menge an Monomeren, nichtionische Emulgatoren, wie Laurylalkohol, der mit 2 bis 20 Molen Ethylenoxid ethoxiliert ist und Alkyl-aryl-oxethylate, verwendet werden.

Als wasserlösliche Salze werden in der Vorlage meist Polyelektrolyte eingesetzt, wie sie auch als Puffersubstanzen dienen, d. h. Gemische aus primären, sekundären und tertiären Alkali- oder Ammoniumphosphaten, doch kommen auch Natriumpyrophosphat oder das Natriumsalz der Ethylendiamintetraessigsäure sowie ferner Natriumchlorid, Natriumbikarbonat, Calciumsulfat, Magnsiumsulfat, Calciumchlorid, Magnesiumchlorid, Ammoniumchlorid und/oder Natriumsulfat in Betracht.

Als Polymerisationsinhibitoren können solche Stoffe verwendet werden, wie sie auch bei der Lagerung von Monomeren zur Verhinderung einer unerwünschten Polymerisation eingesetzt werden. 8esonders haben sich Hydrochinon, Hydrochinon-monomethylether, t-Butylbrenzkatechin und Phenothiazin bewährt.

Als Monomere A seien vor allem Vinylacetat, Styrol, Methacrylsäuremethylester, Acrylnitril, Vinylchlorid, Vinylidenchlorid und ferner Butadien und Vinylpropionat genannt. Für diese Monomeacrylsäuremethylester und ferner Methacrylsäuremethylester-Styrol.

Dagegen führen die Zweier-Kombinationen Vinylacetat/Styrol, Methacrylsäuremethylester/Vinylacetat, Vinylchlorid/Butadien, Vinylchlorid/Styrol, Methacrylsäuremethylester/Vinylpropionat, Vinylidenchlorid/Butadien, Vinylidenchlorid/Vinylacetat und Vinylidenschlorid/Methacrylsäuremethylester in wäßriger Emulsion nur schwer zu Mischpolymerisaten. In einigen Fällen werden Mischungen von Homopolymerisaten gebildet, wobei die Reaktion sehr langsam abläuft und in vielen Fällen, wie z. B. bei Styrol/Vinylacetat kommt die Polymerisation ganz zum Erliegen. Bei derartigen Kombinationen der Monomeren A liegen die Copolymerisationsparameter $r_1$ und $r_2$ also weit auseinander, wobei mindestens einer der beiden Parameter > 1 ist.

Dagegen polymerisieren die genannten Kombinationen der Monomeren A in wäßriger Emulsion gut mit Acrylsäureestern, insbesondere von 1 bis 12 C-Atome enthaltenden geradkettigen oder verzweigten Alkanolen. Derartige gut mit den Monomeren A copolymerisierbare Monomere werden im Rahmen dieser Erfindung als Monomere B bezeichnet. Anders ausgedrückt: die Monomeren A werden bei dem neuen Verfahren in Kombinationen angeordnet, die ungünstige Copolymerisationsperameter aufweisen und im Gemisch mit solchen Monomeren B eingesetzt, die günstige Copolymerisationsparameter mit ihnen zeigen. Bei dem neuen Verfahren können auch jeweils mehr als 3 Monomere A und 2 und/oder mehr Monomere B eingesetzt werden.

Zusätzlich können bei dem neuen Verfahren 0 bis 10, off mit Vorteil 0,5 bis 5 Gewichtsprozent, bezogen auf die gesamten Monomeren an Comonomeren C eingesetzt werden, die reaktive Gruppen aufweisen und für sich polymerisiert, meist wasserlösliche Homopolymerisate ergeben. Beispiele für derartige Comonomere C sind $\alpha$, $\beta$monoolefinisch ungesättigte Mono- und Dicarbonsäuren und deren gefebenenfalls an den Stickstoffatomen substituierte Amide, wie Acrylsäure, Methacrylsäure, Crotonsäure, Fumarsäure, Itaconsäure, Acrylamid, Methacrylamid, N-Methylolacrylamid, N-Methylol-methacrylamid, N-Methoxymethylacrylamid, N-n-Butoxymethylmethacrylamid und N-Methylacrylamid sowie Vinylsulfonsäure und deren wasserlösliche Salze. Beispiele für Monomere C sind auch andere Acrylsäure- und Methacrylsäureester, die sich von meist 2 bis 8 C-Atome aufweisenden Alkandiolen ableiten, wie Butandiol-1,4-mo-noacrylat und -methacrylat und Ethylenglykolmonoacrylat und -methacrylat sowie ferner Ethylenglykoldiacrylat, Butandiol-1,4-diacrylat und -methacrylat.

Bei dem Zufahren der 1 bis 10 Gew.% der Monomerenemulsion innerhalb 1/2 Stunde kann von einer Zulaufgeschwindigkeit von wenigen Litern/Stunde, z. B. von 50 bis 100 Liter/Stunde oder von einer größeren Menge, z. B. 500 bis 1 000 Liter/Stunde ausgegangen und diese gegebenenfalls nur wenig, z. B., um 10 bis 50% oder auch stark, z. B. auf das Doppelte bis 3-fache oder, besonders wenn mit einer geringen Zulaufgeschwindigkeit begonnen wurde, auf bis die 100-fache Menge gesteigert werden. Bewährt haben sich z. B. Steigerungen von 500 bis 900 Liter/Stunde auf 1 500 bis 2200 Liter/Stunde. In manchen Fällen ist es auch zweckmäßig, eine Steigerung von z, B., 50 bis 100 Liter/Stunde auf 1 000 bis 2500 Liter/Stunde innerhalb der ersten halben Stunde ab Zulaufbeginn vorzunehmen.

Die Polymerisationstemperatur liegt im allgeeinen bei 40 bis 150 °C, d. h. wenn radikalbildende Katalysatoren von der Art des Kaliumpersulfats verwendet werden, im Bereich von 50 bis 130, insbesondere von 60 bis 90°C. Sie liegt im Bereich von 5 bis 40 °C, wenn übliche Redoxkatalysatoren eingesetzt werden. Die Menge an Polymerisationsinitiatoren liegt im üblichen Bereich d. h. von 0,05 bis 3, vorzugsweise von 0,1 bis 0,6 Gew.%, bezogen auf die Monomeren.

Nach dem neuen Verfahren können hochkonzentrierte Polymerisat-Dispersionen erhalten werden, deren Polymerisatgehalt z. B. 65 bis 75% beträgt.

Die in den folgenden Beispielen angegebenen Teile und Prozente beziehen sich auf des Gewicht.

**Beispiel 1**

In einem druckfesten Rührkessel werden 493,5 Teile Wasser, 14,1 Teile Natriumpyrophosphat, 7,0 Teile Natriumsalz der Ethylendiamintetraessigsäure und 3,5 Teile eines 40 %igen igen Na-Alkylsulfonates (12 bis 16 kohlenstoffatome im Alkylrest) gut gemischt. Nach dem Aufheizen der Mischung auf 80 °C wird die Aufschlämmung von 3,5 Teilen Natriumpersulfat in 47 Teilen Wasser in den Rührkessel gegeben.

In einem Zulaufgefäß wird vorher folgende Monomerenemulsion hergestellt (Zulauf I);
1 259,0 Teile Wasser
112,8 Teile der 35%igen Lösung des Na-Salzes des Schwefelsäureesters von ethoxiliertem P-n-Nonylphenol (25 Ethylenoxideinheiten)
3,5 Teile t-Dodecylmercaptan
36,3 Teile Acrylsäure (97%ig)
5 640,0 Teile 2-Ethylhexylacrylat
564,0 Teile Vinylacetat

564,0 Teile Methylmethacrylat
282,0 Teile Styrol
3,5 Teile Hydrochinonmonomethylether
In einem weiteren Zulaufgefäß wird die Lösung von 52,8 Teilen Natriumpersulfat in 705 Teilen Wasser bereitgehalten (Zulauf II). Zu der bei 80°C gehaltenen Vorlage im Rührkessel wird zunächst langsam der Zulauf 1 beginnend mit einer Menge von 700 Teile/Stunde und im Verlauf von 1/2 Stunde auf 1 900 Teile/Stunde ansteigend gegeben.

Der Rest von Zulauf 1 wird in weiteren 4,5 Stunden dem Rührkessel zugeführt; Gleichzeitig mit Zulauf 1 wird Zulauf II gleichmäßig innerhalb von 5 Stunden in den Rührkessel gegeben. Nach Beendigung der Zuläufe 1 und II wird die Temperatur des Rührkessels noch 1 Stunde auf 80 °C gehalten, dann wird abgekühlt. Man erhält eine 70%ige, koagulat- und stippenfreie Polymer-Dispersion, die als Haftkleber-Rohstoff geeignet ist.

## Beispiel 2

Man arbeitet wie im Beispiel 1 angegeben, setzt jedoch in Zulauf 1 anstelle des 2-Ethylhexylacrylats 5640 Teile n-Butylacrylat und anstelle von Hydrochinonmonomethylether 10,6 Teile 6-Butyl-brenzkatechin ein. Erhalten wird eine 70%ige, koagulat- und stippenfreie Polymer-Dispersion, die als Bindemittel für Faservliese geeignet ist.

## Beispiel 3

Man arbeitet wie in Beispiel 1 angegeben, ersetzt jedoch die 564 Teile Methylmethacrylat in Zulauf 1 durch Vinylacetat, so daß insgesamt 1 128 Teile Vinylacetat eingesetzt werden. Erhalten wird eine 70%ige koagulat- und stippenfreie Dispersion, die als Klebstoffrohstoff geeignet ist.

## Beispiel 4

Man arbeitet wie in Beispiel 1 angegeben, verwendet jedoch nur 2820 Teile 2-Ethylhexylacrylat und zusätzlich 2820 Teile n-Butylacrylat. Erhalten wird eine 70%ige koagulat- und stippenfreie Polymer-Dispersion, die zur Herstellung von Dichtungsmassen geeignet ist.

## Beispiel 5

Man arbeitet wie in Beispiel 1 angegeben, verwendet jedoch anstelle des Styrols die gleiche Menge Acrylnitril. Erhalten wird eine koagulat- und stippenfreie 70%ige Polymer-Dispersion, die als Haftkleberrohstoff geeignet ist.

## Beispiel 6

Man arbeitet wie im Beispiel 1, ändert jedoch die Einsatzstoffe wie folgt ab: Im Rührkessel werden 18 Teile Natriumpyrophosphat und 3,5 Teile des Na-Salzes der Ethylendiamintetraessigsäure verwendet. Im Zulaufgefäß wird folgende Monomerenemulsion hergestellt (Zulauf I):
1 269,0 Teile Wasser
112,8 Teile der 35%igen Lösung des Na-Salzes des Schwefesläureesters von ethoxiliertem P-n-Nonyl phenol (12 Ethylenoxideinheiten)
3,5 Teile t-Dodecylmercaptan
36,3 Teile Acrylsäure (97%ig)
6 486,0 Teile Ethylacrylat
282,0 Teile Styrol
282,0 Teile Vinylchlorid
1,0 Teile Hydrochinonmonomethylether
Man erhält eine 70%ige, koagulat- und stippenfreie Polymer-Dispersion, die zur Herstellung von Dichtungsmassen geeignet ist.

## Beispiel 7

Man arbeitet wie im Beispiel 1, ändert jedoch Einsatzstoffe wie folgt ab: Im Rührkessel werden 18 Teile Natriumpyrophosphat und 14 Teile des Na-Salzes der Ethylendiamintetraessigsäure verwendet. Außerdem werden anstelle von 3,5 Teilen der 40%igen wäßrigen Na-Alkylsulfonat-Lösung nur 1,5 Teile verwendet.

Im Zulaufgefäß wird folgende Monomerenemulsion hergestellt (Zulauf I):
1 269,0 Teile Wasser
225,0 Teile der 15%igen Lösung von Natrium-Laurylsulfat in Wasser
3,5 Teile t-Dodecylmercaptan
36,3 Teile Acrylsäure (97%ig)
3 243,0 Teile Methylacrylat
3 243,0 Teile n-Butylacrylat
282,0 Teile Methyl-methacrylat
282,0 Teile Vinylidenchlorid
2,0 Teile t-Butyl-brenzkatechin
Man erhält eine 70%ige koagulat- und stippenfreie Polymer-Dispersion, die als Klebstoffrohstoff verwendet werden kann.

## Patentansprüche

1. Verfahren zur Herstellung von wäßrigen Polymer-Dispersionen mit einem Polymerisatgehalt bis 75 Gew.% durch Emulsionscopolymerisation in Gegenwart üblicher anionischer Emulgatoren, Polymerisationsinitiatoren und geringer Mengen Polymerisationsinhibitoren bei üblichen Polymerisationstemperaturen, dadurch gekennzeichnet, daß man mindestens zwei allein mit sich nicht copolymerisierbare Monomere A im Gemisch mit 60 bis 95 Gew.%, bezogen auf die gesamten Monomeren, mindestens eines Monomeren B, das mit beiden Monomeren A copolymerisierbar ist und gegebenenfalls bis zu 10 Gew.%, bezogen auf die gesamten Monomeren, mindestens eines Comonomeren C, das reaktive Gruppen aufweist und vorzugsweise wasserlösliche Homopolymerisate ergibt, unter Zusatz eines Polymerisationsinhibitors nach dem Emulsionszulaufverfahren derart copolymerisiert, daß

a) die vorgelegte wäßrige Phase bei Beginn des Monomerenemulsionszulaufs 0,01 bis 0,5 Gew.%, bezogen auf die Vorlage, anionischen Emulgator und 1 bis 7 Gew.%, bezogen auf die Vorlage, wasserlösliche Salze und

b) die Monomerenemulsion 50 bis 500 ppm, bezogen auf die gesamten Monomeren, Polymerisationsinhibitor enthält, und

c) 1 bis 10 Gew.% der Monomerenemulsion innerhalb 1/2 Stunde ab Zulaufbeginn in pro Zeiteinheit zunehmender Menge zu der Vorlage zugegeben und dann anschließend

d) die restliche Monomerenemulsion in an sich üblicher Weise nach Maßgabe der Polymerisation der Monomeren zugefahren wird.

2. Verfahren nach Anspruch 1, dadurch gekennzeichnet, daß als Monomere B Acrylsäureester mit 1 bis 12 C-Atome enthaltender Alkanole eingesetzt werden.

### Claims

1. A process for the preparation of aqueous polymer dispersions containing up to 7.% by weight of polymer, by emulsion copolymerization in the presence of conventional anionic emulsifiers, polymerization initiators and small amounts of polymerization inhibitors, at conventional polymerization temperatures, wherein at least two monomers A, which per se are not copolymerizable with one another, mixed with from 60 to 95% by weight, based on total monomers, of at least one monomer B which is copolymerizable with both monomers a, and, if desired, up to 10% by weight, based on total monomers, of at least one comonomer C which possesses reactive groups and preferentially gives watersoluble homopolymers, are copolymerized, in the presence of a polymerization inhibitor, by the emulsion feed process, under conditions such that

a) the initial aqueous phase at the start of the monomer emulsion feed contains from 0.01 to 0.5% by weight, based on the initial charge, of anionic emulsifier and from 1 to 7% by weight, based on the initial charge, of water-soluble salts, b) the monomer emulsion contains from 50 to 500 ppm, based on total monomers, of polymerization inhibitor,

c) from 1 to 10% by weight of the monomer emulsion is added, within the first 1/2 hour from the start of the feed, at an increasing rate per unit time, to the initial charge, and thereafter,

d) the remaining monomer emulsion is added in a conventional manner in accordance with the rate of polymerization of the monomers.

2. A process as claimed in claim 1, wherein acrylic acid esters of alkanols of 1 to 12 carbon atoms are used as monomers B.

### Revendications

1. Procédé de préparation de dispersions aqueuses de polymère, d'une teneur en polymère allant jusqu'à 75% en poids, par copolymérisation en émulsion, en présence d'émulsifiants anioniques usuels, d'amorceurs de polymérisation et de faibles quantités d'inhibiteurs de polymérisation à des températures de polymérisation usuelles, caractérisé par le fait qu'avec addition d'un inhibiteur de polymérisation, on copolymérise, selon le procédé d'introduction en émulsion, au moins deux monomères A, non copolymérisables rien qu'entre eux, en mélange avec 60 à 95% en poids, rapportés à l'ensemble des monomères, d'au moins un monomère B qui est copolymérisable avec les deux monomères A et, éventuellement, jusqu'à 10% en poids, rapportés à l'ensemble des monomères, d'au moins un comoncmère C qui possède des groupes réactifs et avantageusement donne des homopolymères, de telle sorte que:

a) la phase aqueuse introduite initialement contienne, au début de l'introduction en émulsion des monomères, 0,01 à 0,5% en poids, rapportés à la quantité introduite, d'émulsifiant anionique et 1 à 7% en poids, rapportés à la quantité introduite, de sels solubles dans l'eau, et

b) l'émulsion de monomères contienne 50 à 500 ppm, rapportés à l'ensemble des monomères, d'inhibiteur de polymérisation, et

c) 1 à 10% en poids de l'émulsion de monomères soient ajoutés à la quantité introduite en une 1/2 heure, à partir du début de l'introduction, et en quantité croissante par unité de temps, puis enfin

d) l'émulsion de monomères restante soit introduite, de manière connue en soi, en fonction de la polymérisation des monomères.

2. Procédé selon la revendication 1, caractérisé par le fait qu'on introduit, comme monomères B, des esters d'acide acrylique et d'alcanols contenant 1 à 12 atomes C.